# FASCICULE DE BREVET EUROPEEN

(11) **EP 3 878 637 B1**
(45) Date de publication et mention de la délivrance du brevet: **29.05.2024**
(21) Numéro de dépôt: 21158603.7
(22) Date de dépôt: 23.02.2021
(51) Int. Cl.: B29C 65/18, B65D 30/02, B65D 30/08, B29L 9/00

(54) **PROCÉDÉ DE FABRICATION D'UN SAC À SOUFFLETS, ET SAC À SOUFFLETS PERFECTIONNÉ**
VERFAHREN ZUR HERSTELLUNG EINES FALTENBEUTELS UND PERFEKTIONIERTER FALTENBEUTEL
METHOD FOR MANUFACTURING A GUSSET BAG, AND IMPROVED GUSSET BAG

(30) Priorité: 10.03.2020 FR 2002384
(43) Date de publication de la demande: 15.09.2021
(73) Titulaire: Coveris Flexibles France, 43290 Montfaucon en Velay (FR)
(72) Inventeur: VALETTE, Eric, 43120 Monistrol-sur-Loire (FR)
(74) Mandataire: Cabinet Laurent & Charras

(56) Documents cités:
- EP-A1- 0 135 649

## Description

### Domaine technique

L'invention se rattache au secteur technique des sacs d'emballage en matière plastique, tels que par exemple des sacs pour l'emballage de produits alimentaires.

Plus particulièrement l'invention trouve une application avantageuse dans le domaine des sacs en matière plastique flexible, notamment obtenus à partir d'une bande d'un film d'épaisseur inférieure à 200 µm, environ.

Ce type de sacs comprend au moins, et d'une manière parfaitement connue, une paroi avant et une paroi arrière dont les bords latéraux éventuellement reliés par des soufflets, un fond, et une ouverture de remplissage.

L'invention concerne plus particulièrement un procédé de fabrication d'un sac d'emballage de ce type, ainsi qu'un sac d'emballage perfectionné.

### Art antérieur

Il est connu de l'art antérieur un procédé de fabrication d'un sac d'emballage comprenant au moins, une paroi avant et une paroi arrière, éventuellement reliées par des soufflets, un fond, et une ouverture de remplissage.

D'une manière générale, le sac est fabriqué à partir d'au moins un film plastique constitué d'un complexe OPP/PE ou PET/PE, avec dans les deux cas le PE positionné pour former la face interne du film et donc l'intérieur du sac, et le PET ou l'OPP positionné pour former la face externe du film et donc l'extérieur du sac.

Par ailleurs, et toujours d'une manière classique, le procédé de fabrication du sac implique la réalisation d'au moins une ligne de soudure sur au moins l'une des parois avant ou arrière du sac.

Dans l'état de la technique, cette ligne de soudure est réalisée par l'intermédiaire d'un dispositif de marquage à chaud appliqué sur la face externe et a tendance à dégrader visuellement ladite face externe.

Par ailleurs, les sacs réalisés à partir d'un complexe OPP/PE ou PET/PE présentent l'inconvénient d'être difficilement recyclables par des techniques de recyclage mécanique.

Le document EP0135649 décrit un procédé de fabrication d'un sac d'emballage dont la recyclabilité peut être facilitée.

### Exposé de l'invention

L'un des buts de l'invention est donc de remédier aux problèmes précités en fournissant un procédé de fabrication d'un sac d'emballage, ainsi qu'un sac d'emballage dont les qualités visuelles et esthétiques ne sont pas dégradées suite aux différentes opérations de soudure réalisées pour former le sac.

Un autre objectif est de fournir un tel sac dont le recyclage mécanique est facilité.

Pour résoudre les problèmes précités, il a été mis au point un procédé de fabrication conforme à l'objet de la revendication 1.

De ce qui précède, le procédé de fabrication est simple, les lignes de soudure sont effectuées en agissant uniquement sur la face externe du film, sans nuire à l'esthétique du sac.

Cette plage de température a été sélectionnée par le Demandeur puisque, outre l'avantage mentionné ci-avant, elle permet de sélectionner des matériaux pour les faces externe et interne du film qui ont un comportement relativement semblable et homogène. Il s'ensuit que la compatibilité entre les matériaux permet de faciliter le recyclage mécanique du sac. Par ailleurs, les faces interne et externe du sac sont assez ressemblantes, ce qui améliore l'esthétique générale du sac.

Selon l'invention, le film plastique est multicouche sous la forme d'un complexe, et afin de permettre la recyclabilité du film plastique, il est réalisé dans un seul matériau. Dans cette configuration, l'esthétique est optimale et le recyclage mécanique peut être assuré d'une manière simple.

Plusieurs techniques sont possibles pour ajuster les températures de ramollissement de la face externe et de fusion de la face interne pour que leur différence soit comprise entre 20°C et 60°C. Par exemple, la densité de la face interne peut être inférieure à la densité de la face externe. Par exemple, la densité de la face interne peut par exemple être comprise entre 0.8 g/cm3et 0.92 g/cm3, hors additif, et la densité de la face externe peut être comprise entre 0.92 g/cm3 et 0.97 g/cm3.

Quand on parle de « face externe » ou « face interne » pour un film constitué d'une unique couche, on parle d'au maximum 50 % de son épaisseur, de préférence 15%.

Pour différencier les densités entre la face externe et la face interne d'un film multicouche et mono matériau, il est possible de jouer notamment sur l'étirement du matériau. En d'autres termes, la face externe peut être constituée d'un matériau polymère étiré mono-axialement, ou bi-axialement afin d'augmenter sa densité.

Le fait d'étirer le polyéthylène implique qu'il faut davantage d'énergie pour ramollir la couche externe et enfin la faire fondre. Un temps de fusion plus long et/ou une température plus élevée est donc nécessaire pour réaliser une fusion de ladite couche externe, ce qui lui permet de résister de façon optimale aux opérations de soudure, sans se dégrader.

Selon des formes de réalisation particulières, la température de ramollissement de la face externe est comprise entre 120°C et 140°C, de préférence 130°C, la température de fusion de la face interne est comprise de préférence entre comprise entre 80°C et 100°C, de préférence 90°C.

Sur une forme de réalisation particulière du procédé, et pendant la formation du sac, les soufflets peuvent, d'une manière connue, être repliés longitudinalement sur eux-mêmes et insérés entre les parois avant et arrière du sac. Dans une autre configuration, les soufflets peuvent être rapportés. Des lignes de soudure permettant alors de fixer les soufflets aux parois avant et arrière sont alors réalisées le long des bords longitudinaux des soufflets, lesquels reposent l'un sur l'autre, par un dispositif de marquage à chaud agissant uniquement sur les parois avant et/ou arrière.

Dans cette configuration, et afin d'éviter tout risque de détérioration de la face externe du sac lors de la réalisation des soudures des soufflets, le procédé selon l'invention prévoit qu'une bande de matériaux à propriété d'isolation thermique, par exemple en polytétrafluoroéthylène, peut être disposée entre les bords longitudinaux des soufflets repliés pour que, pendant l'opération de soudure, lesdits bords longitudinaux reposent chacun sur, et notamment de part et d'autre, de la bande.

L'invention concerne aussi en sac d'emballage selon la revendication 9.

### Description des figures

D'autres avantages et caractéristiques de l'invention ressortiront mieux de la description qui va suivre, donnée à titre d'exemple non limitatif, à partir des figures annexées dans lesquelles :
[Fig. 1] est une représentation schématique illustrant en perspective un sac selon l'invention.
[Fig. 2] est une représentation schématique illustrant un film monocouche présentant un gradient de densité dans son épaisseur.
[Fig. 3] est une représentation schématique illustrant un film multicouche dont la face interne présente une densité inférieure à celle de la face externe.
[Fig. 4] est une représentation schématique illustrant le soudage des bords longitudinaux d'un soufflet.
[Fig. 5] est une représentation schématique similaire à celle la figure 4, une bande de de matériaux à propriété d'isolation thermique étant positionnée entre les bords longitudinaux du soufflet repliés l'un sur l'autre.

### Description détaillée de l'invention

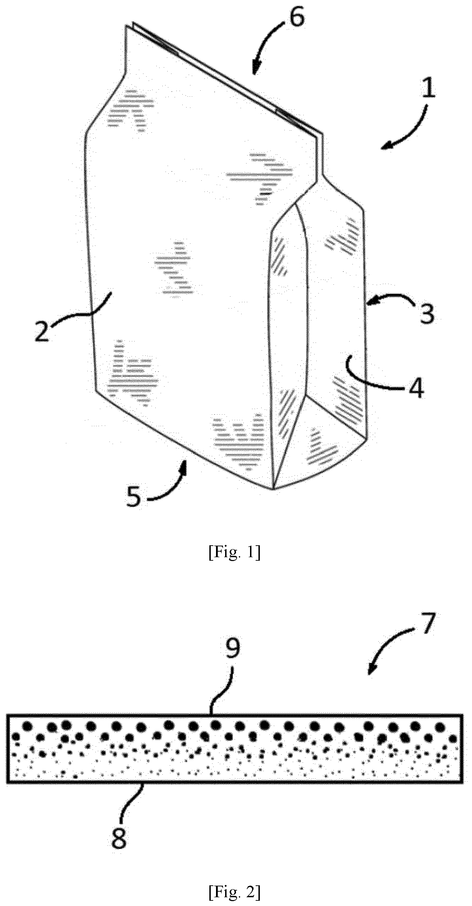

En référence à la figure 1, l'invention concerne un procédé de fabrication d'un sac (1) du type comprenant, et d'une manière connue, au moins, une paroi avant (2) et une paroi arrière (3), dont les bords latéraux sont éventuellement reliés par des soufflets (4), un fond (5), et une ouverture (6) de remplissage.

Le procédé permettant de conformer le sac (1) en tant que tel est connu de l'état de la technique, et peut être réalisé de plusieurs manières possibles. Il ne sera pas décrit plus en détail.

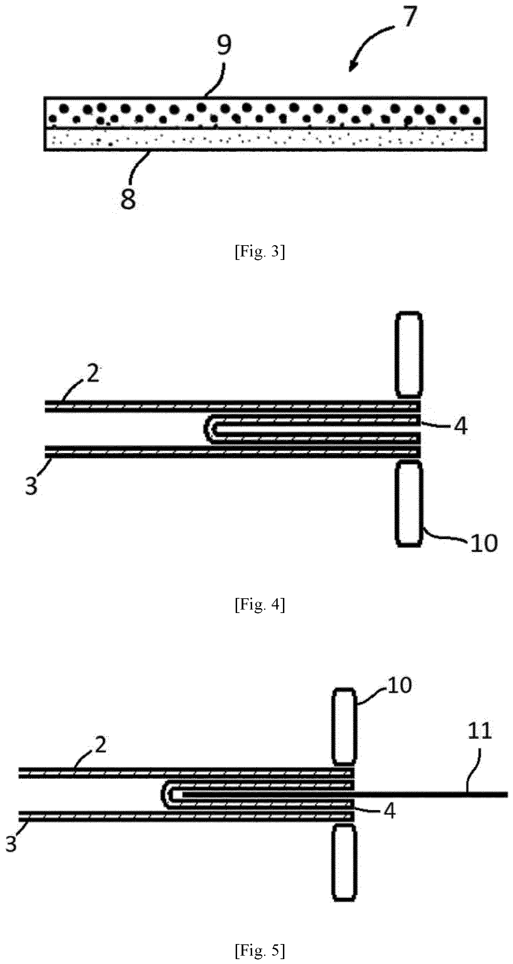

En référence à la figure 3, l'invention se concentre plus particulièrement sur le fait que le sac (1) est fabriqué à partir d'un film (7) plastique présentant une face interne (8) destinée à être positionnée à l'intérieur du sac (1) et une face externe (9) destinée à être positionnée à l'extérieur du sac (1), dont la différence entre la température de ramollissement de la face externe (9) et la température de fusion de la face interne (8) est comprise entre 20°C et 60°C.

Ainsi, lorsqu'il est nécessaire de réaliser une ligne de soudure pendant l'opération de fabrication du sac (1), par exemple pour fermer le fond (5) et/ou l'ouverture (6) du sac (1), et/ou pour rigidifier les bords des soufflets (4), et/ou pour fixer les soufflets (4) aux parois avant (2) et arrière (3), ladite ligne de soudure est réalisée à une température de soudage diffusée comprise entre la température de ramollissement de la face externe (9) et la température de fusion de la face interne (8).

Ce faisant, la soudure est réalisée en faisant fondre uniquement la face interne (8) du film (7), sans ramollir ni dégrader esthétiquement la face externe (9).

La ligne de soudure est réalisée par toute technique appropriée bien connue, et notamment par l'intermédiaire d'un dispositif (10) de marquage à chaud. Le dispositif (10) de marquage à chaud est utilisé avec un temps de contact sur la face externe (9) du film (7) inférieur à 1 s, et par exemple compris entre 100 ms et 600 ms. La température de soudage diffusée est différente de la température de réglage du dispositif (10) de marquage à chaud. A titre d'exemple, le dispositif (10) peut être réglé à une température de 150°C et, avec le temps de contact, l'inertie et les déperditions de chaleur, la température de soudage diffusée peut être de 115°C.

En référence à la figure 2, et selon une forme de réalisation non couverte par les revendications, le film (7) plastique est constitué d'une unique couche.

Dans cette configuration, lorsque l'on parle de face externe (9) ou de face interne (8), on parle, pour chaque face, d'au maximum 50 % de l'épaisseur du film (7).

Afin d'obtenir une différence entre la température de ramollissement de la face externe (9) et la température de fusion de la face interne (8) comprise entre 20°C et 60°C, le film (7) comprend une face interne (8) dont la densité est par exemple inférieure à celle de la face externe (9). En d'autres termes, le film (7) peut présenter un gradient de densité dans son épaisseur, la densité augmentant de depuis la face interne (8) vers la face externe (9).

En référence à la figure 3, et selon l'invention, le film (7) plastique constituant le sac (1) est sous la forme d'un complexe, donc multicouche.

Selon l'invention, pour avoir des densités différentes, mais en permettant la recyclabilité du film (7), le film (7) est multicouche et mono matériau. Pour obtenir la différence de densité désirée, le matériau utilisé pour constituer la face externe (9) peut être étiré mono-axialement, ou bi-axialement, par exemple dans un rapport compris entre 3 :1 et 10 :1, en vue d'augmenter sa densité par rapport au même matériaux, non étiré, utilisé pour constituer la face interne (8). Le film peut par exemple être un complexe MDOPE/PE ou B OPE/PE.

Bien entendu, un matériau étiré peut être utilisé pour former la face externe (9) du film (7) et un matériau non étiré différent peut être utilisé pour former la couche interne (8) du film (7).

En pratique, la température de ramollissement de la face externe (9) est comprise entre 120°C et 140°C, de préférence 130°C, et la température de fusion de la face interne (8) est comprise entre 80°C et 100°C, de préférence 90°C. Dans le cas par exemple d'une température de ramollissement de la face externe (9) de 130°C, et d'une température de fusion de la face interne (8) de préférence 90°C, la température de soudage diffusée peut être de 115°C.

En référence aux figures 4 et 5, l'invention présente alors une application avantageuse lorsque les lignes de soudure permettent de fixer les soufflets (4) aux parois avant (2) et arrière (3).

En effet, dans cette configuration, et pendant la formation du sac (1), les soufflets (4) sont repliés longitudinalement sur eux-mêmes et sont insérées entre les parois avant (2) et arrière (3), les lignes soudure pour fixer les soufflets (4) aux parois avant (2) et arrière (3) sont alors réalisées le long des bords longitudinaux des soufflets (4), lesquels bords reposent l'un sur l'autre, par un dispositif (10) de marquage à chaud agissant uniquement sur les parois avant (2) et/ou arrière (3), voir figure 4.

La soudure fait alors fondre la face interne (8) du film (7) pour fixer les soufflets (4) et ne dégrade pas la face externe (9). Il en est de même pour tout autre type de soudure, par exemple celles permettant de rigidifier les bords longitudinaux des soufflets (4).

En référence à la figure 5, et afin de garantir d'une manière optimale l'intégrité de la face externe (9) du film (7), l'invention prévoit, lorsqu'il s'agit de fixer ou rigidifier les soufflets (4), de pouvoir disposer éventuellement entre les bords longitudinaux des soufflets (4) repliés, une bande (11) de matériau à propriété d'isolation thermique, par exemple une bande (11) de polytétrafluoroéthylène, pour que, pendant l'opération de soudure, les bords longitudinaux reposent chacun sur, et notamment de part et d'autre, de la bande (11), de manière à ce qu'ils ne soient pas en contact et ne soit pas soudés entre eux.

L'invention permet alors d'obtenir un sac (1) d'emballage comprenant au moins, une paroi avant (2) et une paroi arrière (3), dont les bords latéraux sont éventuellement reliés par des soufflets (4), un fond (5), et une ouverture (6) de remplissage, fabriqué à partir d'un film (7) plastique multicouche et mono-matériau présentant une face interne (8) positionnée à l'intérieur du sac (1) une face externe (9) positionnée à l'expert du sac (1), dont la différence entre la température de ramollissement de la face externe (9) et la température de fusion de la face interne (8) est comprise entre 20°C et 60°C, et de préférence égale à 40°.

## Revendications

1. Procédé de fabrication d'un sac (1) d'emballage comprenant au moins, une paroi avant (2) et une paroi arrière (3), éventuellement reliées par des soufflets (4), un fond (5), et une ouverture (6) de remplissage, le sac (1) est fabriqué à partir d'au moins un film (7) plastique présentant une face interne (8) destinée à être positionnée à l'intérieur du sac (1) et une face externe (9) destinée à être positionnée à l'extérieur du sac (1), le procédé impliquant la réalisation d'au moins une ligne de soudure sur au moins l'une des parois avant (2) ou arrière (3), le film (7) plastique est multicouche, et la différence entre la température de ramollissement de la face externe (9) et la température de fusion de la face interne (8) est comprise entre 20°C et 60°C, de sorte que la ligne de soudure est réalisée à une température de soudage diffusée comprise entre la température de ramollissement de la face externe (9) et la température de fusion de la face interne (8), par l'intermédiaire d'un dispositif (10) de marquage à chaud appliqué sur la face externe (9) en faisant fondre la face interne (8) sans ramollir ni dégrader la face externe (9), **caractérisé en ce que** le film (7) plastique est mono-matériau.

2. Procédé selon la revendication 1, **caractérisé en ce que** la densité de la face interne (8) est inférieure à la densité de la face externe (9).

3. Procédé selon l'une des revendications précédentes, **caractérisé en ce que** la température de ramollissement de la face externe (9) est comprise entre 120°C et 140°C, de préférence 130°C.

4. Procédé selon l'une des revendications précédentes, **caractérisé en ce que** la température de fusion de la face interne (8) est comprise entre 80°C et 100°C, de préférence 90°C.

5. Procédé selon l'une des revendications précédentes, **caractérisé en ce que** la température de soudage diffusée est de 115°C.

6. Procédé selon l'une des revendications précédentes, **caractérisé en ce que** la ou les lignes de soudure permettent de fermer le fond (5) et/ou l'ouverture (6) du sac (1), et/ou de rigidifier les bords des soufflets (4), et/ou de fixer les soufflets (4) aux parois avant (2) et arrière (3).

7. Procédé selon l'une des revendications précédentes, **caractérisé en ce que**, pendant la formation du sac (1), les soufflets (4) sont repliés longitudinalement sur eux même et sont insérés entre les parois avant (2) et arrière (3), des lignes de soudures permettant de fixer les soufflets (4) aux parois avant (2) et arrière (3) sont réalisées le long des bords longitudinaux des soufflets (4) reposant l'un sur l'autre, par un dispositif (10) de marquage à chaud agissant uniquement sur les parois avant (2) et/ou arrière (3).

8. Procédé selon la revendication 7, **caractérisé en ce qu'**une bande (11) de matériau à propriété d'isolation thermique est disposée entre les bords longitudinaux des soufflets (4) repliés pour que, pendant l'opération de soudure, lesdits bords longitudinaux reposent chacun sur la bande (11).

9. Sac (1) d'emballage comprenant au moins, une paroi avant (2) et une paroi arrière (3), éventuellement reliées par des soufflets (4), un fond (5), et une ouverture (6) de remplissage, le sac (1) est fabriqué à partir d'au moins un film (7) plastique multicouche présentant une face interne (8) positionnée à l'intérieur du sac (1) et une face externe (9) positionnée à l'extérieur du sac (1), et dont la différence entre la température de ramollissement de la face externe (9) et la température de fusion de la face interne (8) est comprise entre 20°C et 60°C, **caractérisé en ce que** le film (7) plastique est mono-matériau.

## Patentansprüche

1. Verfahren zur Herstellung eines Verpackungsbeutels (1), der mindestens eine Vorderwand (2) und eine Rückwand (3) umfasst, die gegebenenfalls durch Falten (4) verbunden sind, einen Boden (5) und eine Füllöffnung (6) aufweist, wobei der Beutel (1) aus mindestens einem Kunststofffilm (7) hergestellt wird, der eine innere Fläche (8) aufweist, die dazu bestimmt ist, im Inneren des Beutels (1) positioniert zu werden, und eine äußere Fläche (9), die dazu bestimmt ist, außen am Beutel (1) positioniert zu werden, wobei das Verfahren die Herstellung von mindestens einer Schweißlinie an mindestens einer der Vorder- (2) oder Rückwände (3) beinhaltet, der Kunststofffilm (7) ist mehrschichtig, und der Unterschied zwischen der Erweichungstemperatur der äußeren Fläche (9) und der Schmelztemperatur der inneren Fläche (8) liegt zwischen 20°C und 60°C, so dass die Schweißlinie bei einer diffundierten Schweißtemperatur durchgeführt wird, die zwischen der Erweichungstemperatur der äußeren Fläche (9) und der Schmelztemperatur der inneren Fläche (8) liegt, mittels eines Heißprägegeräts (10), das auf die äußere Fläche (9) angewendet wird, indem die innere Fläche (8) geschmolzen wird, ohne die äußere Fläche (9) zu erweichen oder zu beschädigen, **gekennzeichnet dadurch, dass** der Kunststofffilm (7) ein Einzelmaterial ist.

2. Verfahren nach Anspruch 1, **dadurch gekennzeichnet, dass** die Dichte der inneren Fläche (8) geringer ist als die Dichte der äußeren Fläche (9).

3. Verfahren nach einem der vorhergehenden Ansprüche, **dadurch gekennzeichnet, dass** die Erweichungstemperatur der äußeren Fläche (9) zwischen 120°C und 140°C, vorzugsweise 130°C, liegt.

4. Verfahren nach einem der vorhergehenden Ansprüche, **dadurch gekennzeichnet, dass** die Schmelztemperatur der inneren Fläche (8) zwischen 80°C und 100°C, vorzugsweise 90°C, liegt.

5. Verfahren nach einem der vorhergehenden Ansprüche, **dadurch gekennzeichnet, dass** die diffundierte Schweißtemperatur 115°C beträgt.

6. Verfahren nach einem der vorhergehenden Ansprüche, **dadurch gekennzeichnet, dass** die Schweißlinie(n) dazu dienen, den Boden (5) und/oder die Öffnung (6) des Beutels (1) zu schließen, und/oder die Ränder der Falten (4) zu versteifen, und/oder die Falten (4) an den Vorder- (2) und Rückwänden (3) zu befestigen.

7. Verfahren nach einem der vorhergehenden Ansprüche, **dadurch gekennzeichnet, dass** während der Bildung des Beutels (1) die Falten (4) längs auf sich selbst gefaltet und zwischen den Vorder- (2) und Rückwänden (3) eingesetzt werden, Schweißlinien, die die Falten (4) an den Vorder- (2) und Rückwänden (3) befestigen, werden entlang der Längsränder der Falten (4), die aufeinander liegen, durch ein Heißprägegerät (10) durchgeführt, das ausschließlich auf den Vorder-(2) und/oder Rückwänden (3) wirkt.

8. Verfahren nach Anspruch 7, **dadurch gekennzeichnet, dass** ein Streifen (11) aus thermisch isolierendem Material zwischen den längs gefalteten Rändern der Falten (4) angeordnet wird, sodass während des Schweißvorgangs die genannten Längsränder jeweils auf dem Streifen (11) liegen.

9. Verpackungsbeutel (1), der mindestens eine Vorderwand (2) und eine Rückwand (3) umfasst, die gegebenenfalls durch Falten (4) verbunden sind, einen Boden (5) und eine Füllöffnung (6) aufweist, der Beutel (1) wird aus mindestens einem mehrschichtigen Kunststofffilm (7) hergestellt, der eine innere Fläche (8) aufweist, die im Inneren des Beutels (1) positioniert ist, und eine äußere Fläche (9), die außen am Beutel (1) positioniert ist, und dessen Unterschied zwischen der Erweichungstemperatur der äußeren Fläche (9) und der Schmelztemperatur der inneren Fläche (8) zwischen 20°C und 60°C liegt, **gekennzeichnet dadurch, dass** der Kunststofffilm (7) ein Einzelmaterial ist.

## Claims

1. A method for manufacturing a packaging bag (1) comprising at least a front wall (2) and a back wall (3), optionally connected by gussets (4), a bottom (5), and a filling opening (6), the bag (1) is made from at least one plastic film (7) having an inner face (8) intended to be positioned inside the bag (1) and an outer face (9) intended to be positioned outside the bag (1), the method involving the creation of at least one weld line on at least one of the front (2) or back (3) walls, the plastic film (7) is multilayer, and the difference between the softening temperature of the outer face (9) and the melting temperature of the inner face (8) is between 20°C and 60°C, so that the weld line is created at a welding temperature spread between the softening temperature of the outer face (9) and the melting temperature of the inner face (8), through a hot stamping device (10) applied to the outer face (9) by melting the inner face (8) without softening or degrading the outer face (9), **characterized in that** the plastic film (7) is mono-material.

2. The method according to claim 1, **characterized in that** the density of the inner face (8) is lower than the density of the outer face (9).

3. The method according to one of the preceding claims, **characterized in that** the softening temperature of the outer face (9) is between 120°C and 140°C, preferably 130°C.

4. The method according to one of the preceding claims, **characterized in that** the melting temperature of the inner face (8) is between 80°C and 100°C, preferably 90°C.

5. The method according to one of the preceding claims, **characterized in that** the spread welding temperature is 115°C.

6. The method according to one of the preceding claims, **characterized in that** the weld line(s) allow for closing the bottom (5) and/or the opening (6) of the bag (1), and/or stiffening the edges of the gussets (4), and/or attaching the gussets (4) to the front (2) and back (3) walls.

7. The method according to one of the preceding claims, **characterized in that**, during the formation of the bag (1), the gussets (4) are folded longitudinally onto themselves and inserted between the front (2) and back (3) walls, weld lines are created along the longitudinal edges of the gussets (4) resting on one another, by a hot stamping device (10) acting only on the front (2) and/or back (3) walls.

8. The method according to claim 7, **characterized in that** a strip (11) of material with thermal insulation properties is placed between the longitudinally folded edges of the gussets (4) so that, during the welding operation, the said longitudinal edges each rest on the strip (11).

9. A packaging bag (1) comprising at least a front wall (2) and a back wall (3), optionally connected by gussets (4), a bottom (5), and a filling opening (6), the bag (1) is made from at least one multilayer plastic film (7) having an inner face (8) positioned inside the bag (1) and an outer face (9) positioned outside the bag (1), and where the difference between the softening temperature of the outer face (9) and the melting temperature of the inner face (8) is between 20°C and 60°C, **characterized in that** the plastic film (7) is mono-material.
